# FASCICULE DE BREVET EUROPEEN

(11) **EP 4 426 650 B1**
(45) Date de publication et mention de la délivrance du brevet: **01.10.2025**
(21) Numéro de dépôt: 23812958.9
(22) Date de dépôt: 27.11.2023
(51) Int. Cl.: C02F 1/28, C02F 1/24, B01J 20/24, C02F 1/66, C02F 101/36, C02F 103/06

(54) **PROCÉDÉ DE TRAITEMENT D'UN MILIEU LIQUIDE CONTAMINÉ PAR DES PFAS**
VERFAHREN ZUR BEHANDLUNG EINES MIT PFAS VERUNREINIGTEN FLÜSSIGEN MEDIUMS
METHOD FOR TREATING A PFAS-CONTAMINATED LIQUID MEDIUM

(30) Priorité: 28.11.2022 FR 2212449
(43) Date de publication de la demande: 11.09.2024
(73) Titulaire: Spuma, 75008 Paris (FR)
(72) Inventeur: CARRONNIER, Hugo, 75009 PARIS (FR); BRANQUET, Eric, 92100 BOULOGNE-BILLANCOURT (FR)
(74) Mandataire: Ipside
(86) Numéro de dépôt international: PCT/EP2023/083221
(87) Numéro de publication internationale: WO 2024/115416

(56) Documents cités:
- WO-A1-2022/212165
- AU-A1- 2021 200 096
- JP-A- H08 257 548
- JP-A- S53 142 973
- HERNANDEZ ERIK T. ET AL: "Proteins as adsorbents for PFAS removal from water", vol. 8, no. 6, 31 March 2022 (2022-03-31), pages 1188 - 1194, XP093040306, ISSN: 2053-1400, Retrieved from the Internet <URL:http://pubs.rsc.org/en/content/articlepdf/2022/EW/D1EW00501D> [retrieved on 20230419], DOI: 10.1039/D1EW00501D

## Description

La présente invention s'inscrit dans le domaine général de l'épuration des eaux, plus précisément des eaux contaminées par des substances de type perfluoroalkylées et polyfluoroalkylées.

Plus particulièrement, la présente invention concerne un procédé de traitement d'un milieu liquide aqueux contaminé par au moins une substance perfluoroalkylée ou polyfluoroalkylée, notamment par un mélange de substances perfluoroalkylées et polyfluoroalkylées, en vue d'en éliminer cette ou ces substances.

La pollution des eaux est devenue une préoccupation majeure de la population et des législateurs. De nombreuses techniques de dépollution de l'eau ont vu le jour, et le panel des molécules polluantes ciblées par ces techniques s'est élargi, avec la prise en compte régulière de nouveaux polluants dits émergents. Les substances per- et poly-fluoroalkylées, regroupées sous l'acronyme de PFAS (pour l'anglais « Per- and Poly-Fluorinated Alkyl Substances »), définies notamment dans la publication de Buck et al., 2011, Integr Environ Assess Manag, 7(4): 513-541, sont des composés organofluorés synthétiques comportant un ou plusieurs groupes alkyle per- ou poly-fluorés. Les PFAS se caractérisent notamment par la présence d'au moins un groupe méthyle ou méthylène dont l'atome de carbone est totalement fluoré, c'est-à-dire d'au moins un groupe méthyle perfluoré (-CF₃) ou un groupe méthylène perfluoré (-CF₂-). Du fait de la force des liaisons carbone-fluor, ces substances présentent une très forte stabilité chimique.

Les propriétés particulières des PFAS, notamment leur capacité de résistance à la chaleur et leur caractère à la fois hydrophobe et lipophobe, leur conférant un comportement repoussant l'eau tout comme les substances huileuses, les rendent avantageuses pour nombre d'applications industrielles. Depuis les années 1950, les PFAS sont ainsi largement utilisées dans l'industrie, et on les retrouve notamment dans des produits aussi divers que les poêles antiadhésives, les imperméabilisants, les revêtements antitaches, les agents moussants pour l'extinction des incendies, etc.

Les enquêtes analytiques révèlent la présence de PFAS dans de nombreux réservoirs et milieux récepteurs tels que les masses d'eaux souterraines, de surface et les sols, ce qui conduit à une exposition à ces substances de l'ensemble du vivant, comprenant les microorganismes, la flore, la faune et l'homme. Il a notamment été démontré que l'eau contaminée est la première voie d'exposition aux PFAS de l'homme (Hoffman et al., 20211, Environmental Health Perspectives, 119(1): 92-97). Les études toxicologiques montrent par ailleurs de plus en plus fréquemment la toxicité des PFAS et leur implication dans la survenance de nombreuses pathologies, telles que les cancers, la diminution de l'immunité, la diminution de la fertilité, etc. L'élimination des PFAS de l'environnement, en particulier des milieux aqueux, dans lesquels ils se retrouvent fréquemment, est donc devenu un enjeu de santé publique important, d'autant plus difficile à relever que les PFAS sont particulièrement stables dans l'environnement, et se trouvent dans les milieux aqueux sous forme dissoute.

A l'heure actuelle, aucune technique de dépollution des eaux classique ne permet de remédier de manière satisfaisante à la contamination par les PFAS. La filtration sur des filtres de charbon activé, telle que proposée par l'art antérieur, tout comme les autres techniques classiques de coagulation, floculation, sédimentation, et filtration, sont notamment insuffisamment efficaces et ont un coût énergétique conséquent.

Il a été proposé par l'art antérieur de mettre en œuvre, pour l'élimination des PFAS de milieux aqueux, des protéines aptes à absorber ces substances. Le milieu à purifier est mis en contact avec ces protéines, puis en est séparé, après qu'elles aient réalisé la liaison des PFAS contenues dans le milieu.

A titre d'exemple, le document US 2020/197903 décrit un procédé de traitement d'eau souterraine ou générée par lavage du sol, et contaminée par des PFAS, qui utilise un absorbant choisi parmi les protéines végétales, les globulines, les albumines, l'édestine ou la lupine, formant un lit tassé au travers duquel l'eau à épurer est amenée à circuler. Des expériences décrites dans ce document montrent que l'absorbant le plus efficace pour l'élimination des PFAS est l'extrait protéique de chanvre, la poudre de blanc d'œuf s'avérant la moins efficace des absorbants testés.

La publication de Turner et al., 2019, Chemosphere, 229: 22-31 décrit également un procédé de décontamination d'eau contaminée par des PFAS, utilisant un extrait protéique de chanvre ou divers autres extraits protéiques, dont la poudre protéique de soja et la poudre protéique d'œuf. Les travaux décrits dans ce document indiquent que les extraits protéiques largement les plus performants sont ceux issus du chanvre et du soja.

D'autres exemples de l'art antérieur incluent AU 2021 200 096 A1, WO 2022/212165 A1, HERNANDEZ ERIK T. ET AL: "Proteins as adsorbents for PFAS removal from water", ENVIRON. SCI.: WATER RES. TECHNOL., vol. 8, no. 6, 31 mars 2022, pages 1188-1194, JP S53 142973 A et JP H08 257548 A.

Aucun de ces procédés ne permet cependant d'obtenir des taux d'abattement en PFAS satisfaisants à des coûts raisonnables. A ce jour, il reste ainsi extrêmement difficile et couteux de remédier à la contamination des milieux aqueux par les PFAS.

La présente invention vise à pallier les inconvénients des procédés proposés par l'art antérieur pour la décontamination des milieux aqueux pollués par des PFAS, notamment aux inconvénients exposés ci-avant, en proposant un tel procédé qui soit performant, en termes de fiabilité et d'efficacité, pour réaliser l'élimination spécifique des polluants de la famille des PFAS des milieux aqueux, et peu couteux à mettre en œuvre.

Des objectifs supplémentaires de l'invention sont que ce procédé soit facile à réaliser à l'échelle industrielle, y compris pour le traitement de larges volumes de liquide contaminé. L'invention vise également à ce que ce procédé soit le plus respectueux possible de l'environnement, et produise peu de déchets.

A cet effet, il est proposé selon la présente invention un procédé de traitement d'un milieu liquide aqueux contaminé par au moins une substance perfluoroalkylée ou polyfluoroalkylée, en vue d'en éliminer cette substance. Ce procédé comprend une étape de mise en contact du milieu liquide avec de l'ovalbumine, de sorte à réaliser la liaison entre l'ovalbumine et ladite substance, puis une étape d'élimination de l'ovalbumine, dont une partie au moins se trouve alors sous forme liée à la substance perfluoroalkylée ou polyfluoroalkylée, du milieu liquide. Cette étape d'élimination est réalisée par flottation.

Il a été constaté par les présents inventeurs que la mise en œuvre combinée de l'ovalbumine, en tant que protéine apte à lier les PFAS, et de la technique particulière de séparation par flottation, permet d'atteindre des taux d'abattement particulièrement importants de la quantité de PFAS présente dans le milieu liquide aqueux traité, et ce pour un large spectre de PFAS, comprenant notamment les PFAS les plus fréquemment retrouvées dans l'environnement, tel que le sulfonamide alkylbétaïne du 6:2 fluorotélomère (6:2 **FTAB),** et celles décrites comme présentant une toxicité particulière pour les organismes vivants, tels que l'acide perfluorooctane sulfonique (PFOS) et l'acide perfluorooctanoïque (PFOA), ces deux substances étant en outre les plus réglementées dans le monde. Ce taux d'abattement est particulièrement élevé pour les PFAS à moyenne à longue chaîne alkyle, c'est-à-dire à chaîne comprenant au moins 6 atomes de carbone, et notamment pour les PFAS du type acide sulfonique. Une telle performance est d'autant plus surprenante que l'art antérieur, tel qu'illustré par les documents précités, détourne de l'utilisation d'ovalbumine pour une telle application, au profit d'autres protéines telles que les protéines de graines de chanvre, qui présentent des affinités pour les PFAS bien supérieures à celle de l'ovalbumine. Toutefois, lorsque l'utilisation de l'ovalbumine est combinée à la technique de flottation, qui tire parti de la propriété de l'ovalbumine à générer de la mousse lors de la mise en œuvre de la technique de flottation, la capacité d'extraction des PFAS d'un milieu aqueux de l'ovalbumine se trouve potentialisée, à un niveau que rien dans l'art antérieur ne laissait présager. Le niveau de performance du procédé selon l'invention est notamment suffisant pour réaliser l'élimination des PFAS en solution dans des milieux liquides dans des concentrations allant de quelques nanogrammes jusqu'à plus d'une centaine de microgrammes par litre, telles qu'elles sont typiquement rencontrées dans l'environnement dans les eaux de nappes souterraines et de surface, mais également dans les effluents concentrés.

Outre le fait qu'il s'avère particulièrement performant, le procédé selon l'invention est facile et rapide à mettre en œuvre, au moyen de matériels et techniques simples et couramment disponibles dans les installations de traitement des eaux. Le procédé peut notamment être mis en œuvre dans des stations d'épuration, au moyen du matériel qui y est préexistant.

A titre d'exemple, pour le cas particulier de l'acide perfluorooctane sulfonique, un taux d'élimination de près de 100 % peut être atteint en moins d'une heure. Le coût de mise en œuvre du procédé selon l'invention est avantageusement réduit, notamment du fait du faible coût des matières premières qu'il utilise, plus précisément de l'ovalbumine, constituant majoritaire du blanc d'œuf, dont l'approvisionnement en grande quantité est en outre aisé, sous forme liquide ou en poudre, dans les usines alimentaires spécialisées, telles que les casseries d'œufs. Son coût énergétique est également réduit. En particulier, l'ensemble de ses étapes sont de préférence avantageusement mises en œuvre à température ambiante.

Le procédé selon l'invention, qui ne nécessite rien d'autre pour sa mise en œuvre que de l'ovalbumine, protéine biodégradable, et du gaz, en particulier de l'air, est en outre respectueux de l'environnement.

Le procédé selon l'invention peut notamment être utilisé pour le traitement d'un milieu liquide aqueux contaminé par une pluralité de substances perfluoroalkylées et polyfluoroalkylées, en vue de l'élimination de l'ensemble de ces substances.

Le procédé selon l'invention peut en outre répondre à l'une ou plusieurs des caractéristiques décrites ci-après, mises en œuvre isolément ou en chacune de leurs combinaisons techniquement opérantes.

L'étape de mise en contact du milieu liquide avec l'ovalbumine est de préférence réalisée durant un temps suffisant pour assurer une interaction maximale de l'ovalbumine avec les molécules de la ou des substances perfluoroalkylées et polyfluoroalkylées (PFAS) contenues dans le milieu liquide. Dans des modes de mise en œuvre particuliers de l'invention, l'étape de mise en contact du milieu liquide à épurer avec l'ovalbumine est réalisée pendant une durée comprise entre 5 et 60 minutes, notamment comprise entre 5 et 30 minutes. Préférentiellement, cette étape est réalisée avec agitation du milieu liquide à épurer, de sorte à y assurer un répartition homogène de l'ovalbumine. L'étape de mise en contact du milieu liquide avec l'ovalbumine comprend notamment l'introduction, dans le milieu liquide, d'une quantité adéquate d'ovalbumine de sorte à assurer la captation de la totalité des molécules de PFAS contenues dans le milieu liquide. Préférentiellement, cette quantité est comprise entre 0,05 et 10 grammes, notamment entre 0,08 et 8 grammes, par litre du milieu liquide. Ainsi, dans des modes de réalisation particuliers de l'invention, l'étape de mise en contact du milieu liquide avec l'ovalbumine comprend l'introduction, dans le milieu liquide, d'une quantité d'ovalbumine comprise entre 0,05 et 10 g/l, par exemple comprise entre 0,08 et 8 g/l.

L'ovalbumine peut être introduite dans le milieu liquide sous forme solide ou liquide, sous forme pure ou sensiblement pure, ou au sein d'un mélange complexe la contenant. Dans des modes de mise en œuvre préférés de l'invention, notamment du point de vue du coût et de la facilité de mise en œuvre, pour l'étape de mise en contact du milieu liquide avec l'ovalbumine, l'ovalbumine est introduite dans le milieu liquide contenue dans du blanc d'œuf. Comme indiqué ci-avant, le blanc d'œuf, dont l'ovalbumine est le composant principal, offre l'avantage d'une grande disponibilité en quantité importante et à bas coût. Il entre dans les compétences de l'homme du métier de déterminer la quantité adéquate d'un mélange contenant de l'ovalbumine à introduire dans le milieu liquide à épurer, en fonction de la concentration en ovalbumine de ce mélange. A titre d'exemple, de la poudre de blanc d'œuf, obtenue par déshydratation du blanc d'œuf, contenant typiquement environ 76 % en poids d'ovalbumine, peut être introduite dans le milieu liquide à épurer dans une concentration comprise entre 0,1 et 10 g/l. Une telle poudre présente notamment l'avantage d'être simple à utiliser.

Ainsi, le procédé selon l'invention comprend de préférence l'introduction de blanc d'œuf dans le milieu liquide à épurer. A cet effet, le blanc d'œuf peut se trouver sous sa forme naturelle, sous forme de poudre, telle qu'obtenue par déshydratation du blanc d'œuf, ou sous forme d'une solution liquide obtenue par dissolution d'une telle poudre dans un véhicule liquide, de préférence dans l'eau.

Dans des modes de mise en œuvre particuliers de l'invention, le milieu liquide présente un pH compris entre 6 et 6,8, par exemple compris entre 6,4 et 6,5. Un pH dans une telle plage de valeurs favorise avantageusement les forces de liaison se créant dans le milieu entre les molécules de PFAS et la molécule d'ovalbumine. Ainsi, le procédé selon l'invention comprend de préférence une étape de mesure du pH du milieu liquide, et, le cas échéant, une étape d'ajustement de ce pH dans la plage de valeurs précitée. Un tel ajustement peut être réalisé de toute manière classique en elle-même pour l'homme du métier, notamment par introduction dans le milieu liquide d'une quantité adéquate d'une solution tampon, telle qu'une solution tampon de phosphate disodique et monosodique, d'une base telle que l'hydroxyde de sodium ou d'un acide tel que l'acide chlorhydrique. Ces étapes de mesure, et le cas échéant ajustement, du pH, peuvent être réalisées préalablement à l'introduction d'ovalbumine dans le milieu liquide, ou postérieurement à cette introduction, ainsi qu'à tout moment au cours du procédé, de préférence à intervalles réguliers de sorte à maintenir le pH dans sa plage de valeurs optimale tout au long de la mise en œuvre du procédé.

Le procédé selon l'invention peut comprendre l'introduction dans le milieu liquide, outre de l'ovalbumine, de tout autre composé susceptible d'améliorer la performance du procédé d'élimination des PFAS qui y sont contenues. Il peut notamment comprendre l'introduction dans le milieu liquide, avant, concomitamment, ou après, l'introduction d'ovalbumine, d'une ou plusieurs autres substances aptes à lier les PFAS, et/ou moussantes. Préférentiellement, pour une meilleure économie et facilité de mise en œuvre du procédé, l'ovalbumine, ou le blanc d'œuf la contenant, est le seul produit actif introduit ou mis en contact, de quelconque façon, avec le milieu liquide à épurer.

La technique de flottation, également dite de fractionnement ou ségrégation de mousse (en anglais, « foam fractionation »), est bien connue en elle-même. Elle consiste à faire flotter sélectivement un produit se trouvant en suspension dans un milieu liquide au moyen d'une mousse formée par injection de gaz, notamment d'air, dans ce milieu.

L'étape de séparation du procédé selon l'invention comprend ainsi l'injection de gaz dans le milieu liquide contenant l'ovalbumine, dont au moins une partie des molécules s'y trouvent complexées à une ou plusieurs PFAS, de sorte à y former des bulles. Le gaz utilisé est de préférence l'air. D'autres gaz, tels que le diazote ou le dioxygène par exemple, peuvent également être utilisés, seuls ou en combinaison, ces gaz étant préférentiellement choisis pour être chimiquement inertes vis-à-vis de l'ovalbumine et vis-à-vis des PFAS. Préférentiellement, l'injection de gaz est réalisée par un diffuseur de gaz disposé en partie basse d'un réservoir contenant le milieu traité, de sorte à générer un flux ascensionnel de bulles de gaz dans ce dernier. Ce diffuseur présente alors une taille de pores comprise entre 10 et 100 µm, de préférence une taille de pores comprise entre 10 et 50 µm, notamment entre 10 et 30 µm, de sorte à former des bulles de gaz de même diamètre.

Dans des modes de réalisation alternatifs de l'invention, particulièrement adaptés à une mise en œuvre industrielle et en continu, l'injection de gaz dans le milieu liquide est réalisée par introduction dans ce dernier d'eau saturée en microbulles de gaz, notamment d'air, dite eau blanche.

Les molécules d'ovalbumine présentes dans le milieu liquide s'accumulent sur les bulles de gaz injectées dans celui-ci, et remontent avec elles à la surface du milieu liquide, à laquelle se forme une mousse contenant les molécules d'ovalbumine ainsi les molécules de PFAS qui y sont liées, réalisant par là-même leur séparation du milieu liquide, qui se trouve ainsi épuré.

Dans des modes de mise en œuvre particuliers de l'invention, l'étape d'élimination par flottation du procédé comprend :
- l'injection de gaz dans le milieu liquide pendant une durée comprise entre 5 et 60 minutes, de préférence comprise entre 5 et 40 minutes, de sorte à former une mousse en surface du milieu liquide, cette mousse contenant l'ovalbumine et la ou les substances perfluoroalkylées et polyfluoroalkylées initialement contenues dans le milieu liquide, tout du moins une proportion importante de cette ou ces substances,
- et la collecte de la mousse ainsi formée, de sorte à la séparer du milieu liquide alors épuré.

Le débit de gaz à injecter dans le milieu liquide dépend du rapport volume / surface du milieu liquide à épurer. Il est du ressort de l'homme du métier de déterminer le débit de gaz adéquat pour chaque installation donnée. Le débit de gaz, notamment d'air, injecté dans le milieu liquide est par exemple compris entre 0,1 et 10 I/min, notamment compris entre 0,1 et 1 l/min.

La collecte de la mousse formée en surface du milieu liquide peut être réalisée par tout moyen connu de l'homme du métier. Elle peut par exemple être réalisée par débordement, par déversement, par un système d'écumoire ou encore par aspiration.

De manière tout à fait avantageuse, le procédé selon l'invention produit une faible quantité de déchets.

La mousse collectée peut être soumise à un traitement destructif, pouvant être de tout type. Ainsi, le procédé selon l'invention peut comprendre une étape de traitement de la mousse collectée par dégradation thermique, par sonolyse, par plasma, etc.

Comme indiqué ci-avant, la combinaison de l'ovalbumine et de la technique de flottation permet d'atteindre des taux d'élimination des PFAS particulièrement importants en de courtes durées, avec un nombre d'opérations à réaliser minimal et à faible coût. La technique de flottation s'avère notamment bien plus efficace, pour séparer l'ovalbumine chargée en PFAS du milieu liquide, que les autres techniques classiques de séparation, telles que la centrifugation ou la centrifugation et coagulation acide. L'ovalbumine s'avère quant à elle bien plus efficace que les autres protéines en combinaison avec la technique de flottation, y compris que les protéines décrites par l'art antérieur comme présentant une bien meilleure capacité de liaison avec les PFAS.

Sans préjuger des phénomènes sous-tendant une telle performance, on peut supposer qu'elle est au moins en partie due à une synergie entre deux propriétés de l'ovalbumine, dont l'invention tire avantageusement profit pour extraire spécifiquement les polluants de la famille PFAS d'un milieu liquide, en particulier de type aqueux, qui les contient, à savoir l'affinité de l'ovalbumine pour cette classe de substances chimiques et sa capacité à générer de la mousse. Cet effet synergique était toutefois inattendu, et son ampleur d'autant moins.

Le procédé selon l'invention peut être mis en œuvre au moyen de tout dispositif classique en lui-même, comprenant notamment un réacteur, dans lequel est placé le milieu liquide à épurer, un moyen d'alimentation de ce réacteur en ovalbumine, un diffuseur de gaz dans le milieu liquide, et un moyen de collecte de la mousse formée, ainsi que des moyens éventuels de mesure du pH, agitation, etc.

Avantageusement, à l'échelle industrielle, le procédé peut être mis en œuvre en continu, au moyen d'une installation comprenant un système générant des microbulles dans une cuve dite de bullage dans laquelle le milieu liquide à traiter est entraîné en continu, soit sous forme d'eau blanche injectée dans le flux de milieu liquide à traiter soit à partir d'un ou plusieurs diffuseur(s) d'air positionné(s) en partie basse de ce flux. Dans une telle configuration, l'ovalbumine est de préférence injectée dans le flux de milieu liquide à traiter en amont de la cuve de bullage, au moyen d'un système approprié, par exemple, soit par une lyre de mélange, soit dans une cuve de mélange, ou tout autre système permettant un temps de contact ovalbumine / milieu liquide suffisant avant que ce dernier ne parvienne à la cuve de bullage. La mousse qui s'accumule à la surface de la cuve de bullage, contenant le(s) PFAS, peut être récupérée par un système de racleur de surface circulant à contre-courant du flux de milieu liquide, puis être évacuée, par exemple au moyen d'une surverse, dans une trémie d'évacuation, avant d'être récupérée dans un contenant approprié.

Le milieu liquide aqueux auquel est appliqué le procédé selon l'invention peut être de tout type. Préférentiellement, dans le contexte d'application du procédé à la gestion des sites et des sols pollués, en particulier au traitement des eaux contaminées, le milieu liquide aqueux est une eau souterraine, une eau de surface, une eau issue du lavage d'un sol, ou des eaux usées.

Ainsi, le procédé selon l'invention peut optionnellement comprendre une étape préalable de pompage du milieu liquide à épurer hors d'une nappe phréatique, ou d'une eau résiduaire en surface du sol.

Dans des modes de mise en œuvre particuliers de l'invention, représentatifs d'une telle eau phréatique ou de surface contaminée typiquement retrouvée dans l'environnement, le milieu liquide auquel est appliqué le procédé selon l'invention contient de 0,1 à 2000 µg/l de substance(s) perfluoroalkylée(s) ou polyfluoroalkylée(s). On entend par là une concentration totale en PFAS dans le milieu.

Le procédé selon l'invention comprend optionnellement une étape préalable de mesure de la concentration en PFAS dans le milieu liquide à épurer. Une telle mesure peut par exemple être réalisée selon la méthode décrite dans la norme ASTM D7979-2020.

Le procédé selon l'invention permet d'éliminer des milieux aqueux des PFAS appartenant à l'ensemble des catégories qui en sont répertoriées, en particulier appartenant aux quatre grandes sous-classes représentatives de l'ensemble des catégories de PFAS, à savoir les acides sulfoniques perfluoroalkylés, les acides carboxyliques perfluoroalkylés, les sulfonamides perfluoroalkylés et les acides sulfoniques fluorotélomères. Il s'avère le plus performant pour l'élimination des acides sulfoniques perfluoroalkylés et des acides carboxyliques perfluoroalkylés, notamment du type à moyenne à longue chaîne, c'est-à-dire dont le groupement alkyle comporte 6 ou 7 atomes de carbone ou plus.

Dans des modes de mise œuvre particuliers de l'invention, la substance perfluoroalkylée ou polyfluoroalkylée contenue dans le milieu liquide à épurer, et que le procédé selon l'invention vise à éliminer, comprend une chaine alkyle en C6 ou plus, notamment en C7 ou plus, et appartient à la sous-classe des acides sulfoniques perfluoroalkylés ou des acides carboxyliques perfluoroalkylés. Le procédé selon l'invention est notamment particulièrement efficace pour l'élimination des substances perfluoroalkylées ou polyfluoroalkylées du type des acides sulfoniques perfluoroalkylés comprenant une chaine alkyle en C6 ou plus.

Préférentiellement, le milieu liquide à épurer contient majoritairement des substances perfluoroalkylées et polyfluoroalkylées du type acides sulfoniques perfluoroalkylés et/ou acides carboxyliques perfluoroalkylés, dont le groupe alkyle comprend au moins 6 atomes de carbone, préférentiellement au moins 7 atomes de carbone, que le procédé selon l'invention vise à éliminer.

Le procédé selon l'invention permet également l'élimination des milieux liquides de substances perfluoroalkylées ou polyfluoroalkylées à plus courte chaine alkyle.

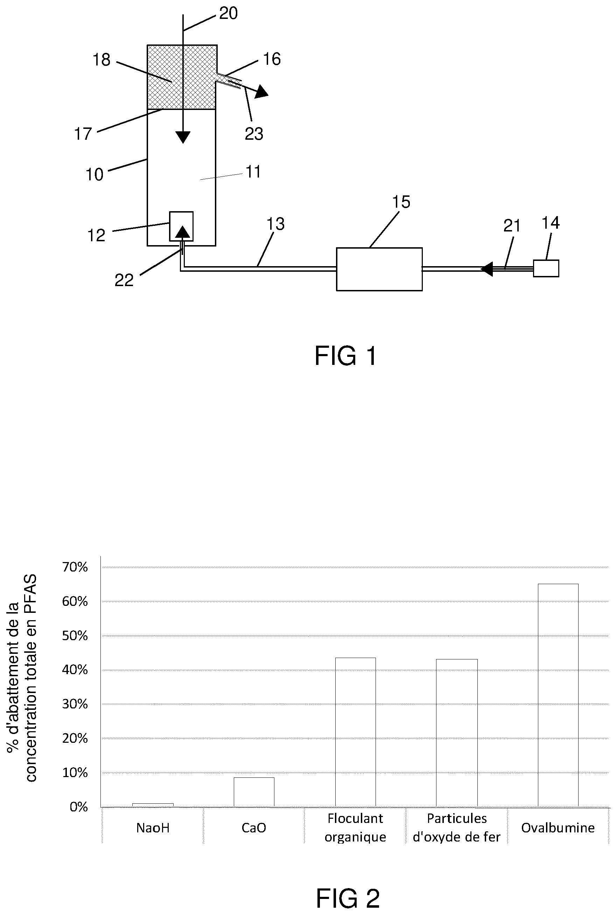

Les caractéristiques et avantages de l'invention apparaîtront plus clairement à la lumière des exemples de mise en œuvre ci-après, fournis à simple titre illustratif et nullement limitatifs de l'invention, avec l'appui des figures 1 à 3, dans lesquelles :
La figure 1 représente de manière schématique un exemple de dispositif utilisé pour la mise en œuvre d'un procédé selon l'invention, et les principales étapes de ce procédé.
La figure 2 montre un graphe représentant le % d'abattement de la concentration totale en PFAS dans un échantillon d'eau contaminée par des PFAS, après sa mise en présence avec divers floculants/coagulants classiques (NaOH, CaO, un floculant organique ou des particules d'oxyde de fer), ou avec de l'ovalbumine, la séparation étant réalisée par filtration.

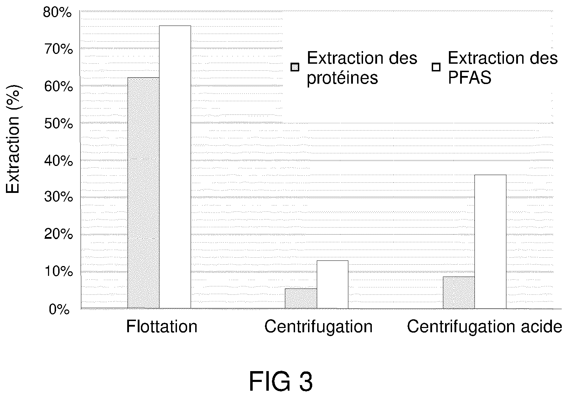

La figure 3 montre un graphe représentant le taux d'extraction (en %) respectivement des PFAS et des protéines, par différentes méthodes (flottation, centrifugation, centrifugation acide) mises en œuvre après mise en contact d'un échantillon d'eau contenant des PFAS avec de l'ovalbumine, pendant 15 min.

Un exemple de dispositif pour la mise en œuvre d'un procédé d'épuration des milieux liquides contaminés par des PFAS selon l'invention, qui a notamment été utilisé pour les expériences décrites ci-après, à l'échelle du laboratoire, est montré sur la figure 1. Ce dispositif comprend un réacteur 10, de préférence en verre, contenant le volume de milieu liquide à épurer 11. Dans sa partie basse, le réacteur 10 contient un bulleur 12, de préférence en céramique frittée. Ce bulleur est relié, par une canalisation 13, à un générateur de gaz comprimé, notamment d'air comprimé, 14. Un régulateur de pression 15 est monté sur la canalisation 13, entre le générateur de gaz comprimé 14 et le bulleur 12. Dans sa partie haute opposée, le réacteur 10 est muni d'un bec verseur 16.

Pour la mise en œuvre du procédé conforme à l'invention, comprenant une étape de séparation par flottation (ou fractionnement de mousse), les étapes suivantes sont réalisées. En première étape, de l'ovalbumine en quantité adéquate est introduite dans le réacteur, dans le milieu liquide à épurer 11, comme indiqué en 20 sur la figure. Après un temps de contact prédéterminé, du gaz comprimé est injecté dans la canalisation 13, comme indiqué en 21 sur la figure, jusqu'au bulleur 12, comme indiqué en 22. Le bulleur 12 diffuse alors de fines bulles (non représentées sur la figure) dans le milieu liquide 11. Il se forme dans le réacteur 10, au-dessus de la surface 17 du liquide, une mousse 18 chargée en complexe ovalbumine-PFAS. Cette mousse s'échappe naturellement du réacteur 10, comme indiqué en 23 sur la figure, par le bec verseur 16, et est récupérée. A l'issue de ces étapes, le milieu liquide restant dans le réacteur est avantageusement épuré des PFAS qu'il contenait initialement.

### A/ EXEMPLE 1 - Etude de l'efficacité du procédé selon l'invention

### A. 1/ Matériel et méthodes généraux

Le matériel utilisé comprend :
- de la verrerie borosilicatée,
- un pH-mètre Mettler Toledo AG SevenEasy^{®},
- une balance Mettler Toledo avec une précision de 10⁻⁴ g,
- une balance de précision Mettler AE163 avec une précision de 10⁻⁵ g,
- des pipettes de précision avec une précision de 10-100 µl,
- un agitateur magnétique 10510 Bioblock Scientific.

Deux types d'échantillons d'eau contaminée sont utilisés : un échantillon prélevé et un échantillon dopé.

L'échantillon d'eau contaminée prélevé provient d'un stock d'eau de ruissellement collectée sur le site d'un incendie industriel dans lequel des mousses anti-incendie dites AFFF (pour Agents Formant un Film Flottant) ont été utilisées. L'échantillon a été conservé dans un cubitainer de 50 L fermé. Son pH initial était de 8,24. Le tableau 1 présente la liste et les concentrations des PFAS mesurées dans cet échantillon avant traitement.

**Tableau 1 - liste et concentrations des PFAS dans l'échantillon d'eau prélevé L'échantillon d'eau dopé a été préparé à partir d'eau distillée et des 10 composés PFAS purs obtenus auprès de la société Sigma-Aldrich énumérés dans le tableau 2, aux concentrations indiquées.**

| Substance | Concentration (µg/l) |
|---|---|
| Ammonium 4-trifluorométhylperfluoroheptanoate (P4MHpA) | 0,019 |
| Ammonium 5-trifluorométhylperfluoroheptanoate (P5MHpA) | 0,024 |
| Ammonium 6-trifluorométhylperfluoroheptanoate (P6MHpA) | 0,042 |
| Perfluoro-1-méthyl-heptanesulfonate (P1MHpS) | 0,055 |
| Perfluoro-3-méthyl-heptanesulfonate (P3MHpS) | 0,27 |
| Perfluoro-4-méthyl-heptanesulfonate (P4MHpS) | 0,48 |
| Perfluoro-5-méthyl-heptanesulfonate (P5MHpS) | 0,99 |
| Perfluoro-6-méthyl-heptanesulfonate (P6MHpS) | 1,7 |
| Potassium 3,5-di(trifluorométhyl)perfluorohexanesulfonate (P35DMHXS) | 0,094 |
| Potassium 4,5-di(trifluorométhyl)perfluorohexanesulfonate (P45DMHXS) | 0,062 |
| Potassium 5,5-di(trifluorométhyl)perfluorohexanesulfonate (P55DMHXS) | 0,122 |
| Acide heptafluorobutyrique (PFBA) | 0,414 |
| Acide nonofluoropentanoïque (PFPeA) | 0,109 |
| Acide undécafluorohexanoïque (PFHxA) | 0,67 |
| Acide perfluoroheptanoïque (PFHpA) | 0,209 |
| Acide perfluorooctanoïque (PFOA) | 0,8137 |
| Acide perfluorononanoïque (PFNA) | 0,01 |
| Acide perfluorodécanoïque (PFDA) | 0,01 |
| Acide perfluorobutane sulfonique (PFBS) | 0,7 |
| Acide perfluorohexane sulfonique (PFHxS) | 2,95 |
| Acide perfluoro-n-undécanoïque (PFUnA) | 0,01 |
| Acide perfluorooctane sulfonique (PFOS) (contenant des traces de LPFHxS et LPNFS) | 13,163 |
| Acide tricosafluorododécanoïque (PFDoA) | 0,01 |
| Total | 22,9267 |

**Tableau 2 - liste et concentrations des PFAS dans l'échantillon d'eau dopé**

| Substance | N° CAS | Concentration (µg/L) |
|---|---|---|
| Acide Perfluorononanoïque (PFNA) | 375-95-1 | 35,5 |
| Acide perfluorooctane sulfonique (PFOS) (solution à 40%) | 1763-23-1 | 374 |
| Acide Perfluorooctanoïque (PFOA) (solution à 10mg/l) | 335-67-1 | 106 |
| Acide perfluorohexanoïque (PFHxA) | 307-24-4 | 187 |
| Acide perfluorobutane sulfonique (PFBS) | 375-73-5 | 25,8 |
| Acide Heptafluorobutyrique (PFBA) | 375-22-4 | 740 |
| Acide Perfluoro (2-méthyl-3-oxahexanoïque) (GenX) | 13252-13-6 | 325 |
| Acide Perfluoroheptanoïque (PFHpA) | 375-85-9 | 7,7 |
| Acide Tricosafluorododécanoïque (PFDoA) | 307-55-01 | 2,99 |
| Acide Perfluorodécanoïque (PFDA) | 335-76-2 | 33,3 |

Les concentrations en PFAS des échantillons initiaux et après essais ont été déterminées selon la méthode ASTM D7979-2020 (limite de quantification de 50 ng/l).

La teneur en protéines présentes dans les échantillons a été estimée par mesure de l'azote total selon la méthode décrite dans la norme NF EN 25663.

Pour les expériences étudiant l'impact du pH, les échantillons ont été préparés dans 300 ml d'eau distillée. Une solution mère a été réalisée par dissolution de blanc d'œuf en poudre, comme décrit ci-avant, par agitation magnétique. Les différents pH ont été obtenus à partir d'une solution tampon de phosphate disodique et monosodique :
- 27,6 g de dihydrogénophosphate monosodique dissous dans 230 ml d'eau déionisée,
- 35,1 g d'hydrogénophosphate disodique dissous dans 740 ml d'eau déionisée,
avec ajustement aux différents pH par de l'hydroxyde de sodium NaOH concentré ou de l'acide chlorhydrique HCl, et ajout d'eau déionisée qsp 1 l.

### A.2/ Expérience 1 - Efficacité de l'ovalbumine pour l'adsorption des PFAS

L'efficacité de l'ovalbumine pour l'extraction des PFAS a été évaluée sur 1 l d'échantillon d'eau contaminée prélevé décrit ci-avant.

Des blancs d'œufs frais ont été utilisés comme source d'ovalbumine. 10 ml de blanc d'œuf frais, avec une teneur de 11% de protéines, ont été introduits dans 1 l d'échantillon à décontaminer. La génération de mousse a été assurée par une agitation manuelle vigoureuse de 50 s ; puis la mousse a été collectée manuellement à l'aide d'une spatule, et le milieu liquide restant a été analysé. A titre de comparaison, différents floculants / coagulants fréquemment utilisés dans les procédés de traitement des eaux ont été mis en œuvre de la même manière pour l'extraction des PFAS dans 1 l d'échantillon d'eau contaminée prélevé. Ces réactifs sont décrits dans le tableau 3.

**Tableau 3 - Réactifs utilisés**

| | | |
|---|---|---|
| Floculant/coagulant | Concentration (/I) | Détails |
| Hydroxyde de sodium NaOH | 20 ml | lessive de soude industrielle à 30% |
| Oxyde de calcium | 5 g | Oxyde de calcium (CaO >99% |
| CaO | | en poudre), fournisseur Sigma-Aldrich |
| Particules magnétiques d'oxyde de fer (Fe₃O₄) | 1 g | HYMAG'IN - Type : HHM-2102 - PAM2433 |
| Floculant organique | 3 ml | EM 640 - CT (FLOPAM^{®}), fournisseur SNF Floerger |

Le floculant organique utilisé avait une masse moléculaire élevée, une structure linéaire et une charge cationique.

Tous les échantillons ont été préalablement homogénéisés avec un agitateur magnétique et filtrés sur une colonne de 25 x 5 cm de sable calibré à 0,5 mm avant traitement, puis une deuxième fois après chaque essai, afin de séparer les solides déposés et les flocs du milieu liquide. Pour chaque échantillon, un filtre à sable nouveau a été utilisé pour éviter les contaminations croisées.

Pour l'essai visant à quantifier les méthodes d'adsorption avec des particules magnétiques, 1 g de particules magnétiques a été ajouté directement dans l'eau contaminée. L'échantillon a été placé dans un agitateur rotatif pendant 24 h. Les particules ont été séparées après un temps de contact de 24 h à l'aide d'un disque aimanté.

Les résultats obtenus sont montrés sur la figure 2. Les taux d'abattement obtenus sont plus précisément de 1 % pour NaOH, 9 % pour CaO, 44 % pour le floculant organique, 43 % pour les particules d'oxyde de fer, et 65 % pour l'ovalbumine. On constate que parmi les différents traitements testés, celui utilisant l'ovalbumine présente le meilleur taux d'abattement.

### A.3/ Expérience 2 - Efficacité de la séparation par flottation combinée à l'utilisation d'ovalbumine

Dans cette expérience, différentes techniques de séparation (flottation, centrifugation et centrifugation acide) ont été expérimentées après mise en contact d'1 l d'échantillon d'eau dopée tel que décrit ci-avant, contenant 1,83 mg/l de PFAS, pendant 15 min, avec de l'ovalbumine.

L'ovalbumine a été utilisée sous forme de poudre de blanc d'œuf acquise auprès du distributeur Cerf Dellier (Réf. P2055, marque Patisdecor). Cette poudre a été mélangée avec de l'eau distillée à l'aide d'un agitateur magnétique pour créer une solution liquide homogène avant son introduction dans le réacteur. Le blanc d'œuf a été introduit dans l'échantillon d'eau dopée à une concentration de 1 g/l.

Les paramètres suivants ont été appliqués pour la flottation :
- débit d'air pour le bullage : 0,3 I/min,
- temps de bullage : 40 min.

Le milieu liquide restant après collecte de la mousse a été soumis à analyse de sa concentration en PFAS d'une part, et en protéine (dont ovalbumine) d'autre part.

Pour la séparation par centrifugation, l'échantillon contenant les PFAS et l'ovalbumine a été centrifugé pendant 15 min, avec une vitesse de 4200 tr/min et une accélération de 8g. Le surnageant a été collecté pour analyse.

Pour la séparation par centrifugation acide, 5 g d'acide trichloracétique (98% en poudre) ont été ajoutés dans l'échantillon contenant les PFAS et l'ovalbumine. Une centrifugation a ensuite été appliquée pendant 15 min, avec une vitesse de 4200 tr/min et une accélération de 8g. Le surnageant a été collecté pour analyse.

Les résultats obtenus sont montrés sur la figure 3. On observe que la méthode de flottation, ou fractionnement de mousse, qui consiste à injecter des microbulles d'air dans le milieu afin de faire remonter l'ovalbumine et les PFAS associées en surface du liquide, apparait comme la plus efficace parmi les trois méthodes testées.

Le milieu liquide obtenu après l'étape de flottation a été soumis à une analyse plus fine ciblant des PFAS particulières. Pour ces substances, les taux d'abattement obtenus sont indiqués dans le tableau 4.

**Tableau 4 - Taux d'abattement de chaque substance**

| PFAS | PFNA | PFDA | PFDoA | LPFHxS | PFOS | LPFNS |
|---|---|---|---|---|---|---|
| % abattement | 92 | 89 | 71 | 83 | 92 | 100 |

On observe une bonne performance du procédé selon l'invention pour l'ensemble de ces substances.

### A.4/ Expérience 3 - pH du milieu liquide

Cette expérience a été réalisée comme décrit dans l'Expérience 2 ci-avant, à l'exception de la concentration de blanc d'œuf utilisée, qui a été de 1,6 g/l.

Le pH de l'échantillon a en outre été ajusté à différentes valeurs, comprises entre 5,2 et 7,6. Les résultats obtenus, en termes de quantité de protéine extraite du milieu (en mg d'azote par l) en fonction du pH, sont indiqués dans le tableau 5.

**Tableau 5 - Quantité de protéines extraites d'un échantillon d'eau contenant des PFAS par un procédé conforme à l'invention, pour différents pH de l'échantillon**

| | | | | | | | |
|---|---|---|---|---|---|---|---|
| pH | 5,2 | 5,6 | 6 | 6,4 | 6,8 | 7,2 | 7,6 |
| Protéines extraites (mgN/I) | 184 | 183 | 253 | 279 | 240 | 200 | 175 |

On observe que la quantité de protéines extraites du milieu liquide est importante pour tous les pH testés, la plage de 6 à 6,8 permettant d'obtenir les meilleurs taux d'extraction.

### B/ EXEMPLE 2 - Etude comparative de différentes protéines

### B. 1/ Matériel et méthodes

Le matériel utilisé comprend :
- de la verrerie borosilicatée,
- un pH-mètre Mettler Toledo AG SevenEasy^{®},
- une balance Mettler Toledo XP6002 SDR, d = 0,01/0,1 g,
- une balance de précision Mettler AE163, d = 0,01/0,1 mg,
- des micropipettes (EASY 40+, 10 - 100 µL) avec embouts (ULTRAFINE^{®} POINT, VWR),
- une tige métallique en acier inoxydable avec une pierre poreuse de diffusion de l'air pour effectuer le bullage.

Des échantillons d'eau dopés ont été préparés par dilution dans de l'eau distillée, sous agitation magnétique, de composés PFAS purs distribués par Sigma-Aldrich, CPA Chem, Alfa Aesar et Manchester Organic Limited, selon la composition décrite dans le tableau 6.

**Tableau 6 - liste et concentrations des PFAS dans les échantillons d'eau dopés Le pH des échantillons a été ajusté et maintenu à 6,4 à l'aide d'un tampon phosphate disodique et monosodique.**

| Substance | N° CAS | Concentration (µg/L) |
|---|---|---|
| Acide perfluorooctane sulfonique (PFOS) (Sigma-Aldrich, solution à 40%) | 1763-23-1 | 12 |
| Acide Perfluorooctanoïque (PFOA) (CPA Chem, solution de 10mg/l) | 335-67-1 | 4 |
| Acide perfluorohexanoïque (PFHxA) (Sigma-Aldrich, forme liquide ≥ 97%) | 307-24-4 | 11 |
| Acide perfluorohexane sulfonique (PFHxS) | 355-46-4 | 0,2 |
| Acide perfluoroheptane sulfonique (PFHxpS) | 21934-50-9 | 0,3 |
| Acide Perfluorobutane sulfonique (PFBS) (LGC, forme liquide, 97%) | 375-73-5 | 14 |
| Acide Perfluoro (2-méthyl-3-oxahexanoïque) (GenX) (Manchester Organics Limited, forme liquide 97%) | 13252-13-6 | 10 |
| Capstone product B (6:2 FTAB) (LGC, forme solide ≥99%) | 34455-29-3 | 15 |
| Acide Perfluorodécanoïque (PFDA) (Alfa Aesar, forme solide 97%) | 335-76-2 | 1 |

Les protéines mises en œuvre ont été les suivantes :
- ovalbumine (OVA), sous forme de blancs d'œuf en poudre de pureté en protéines 76% (Myprotein^{®}),
- albumine sérique bovine (BSA), pureté 96% (Fischer Scientific),
- protéine de lysozyme de poulet indigène (LYS), pureté 95% (abcam),
- protéine de graines de chanvre en poudre (CHA), pureté 54% (Myvegan^{®}),
- isolat de protéines de soja (SOJ), pureté 90% (Myvegan^{®}).

Pour chaque protéine, 1 l d'échantillon dopé aux PFAS a été utilisé, avec une concentration dans l'échantillon de 1 g/l de chacun des produits ci-dessus. Pour OVA, une concentration de 10 g/l a également été étudiée (« OVAb »).

Après 5 min de contact entre la protéine et l'échantillon à épurer, le bullage a été réalisé à l'aide d'une pierre à bulles de tailles de pores entre 10 et 100 µm, libérant de l'air avec un débit de 0,3 l/min pendant 40 min, en évacuant la mousse produite au fur et à mesure de sa formation.

A titre de contrôle, 1 l d'échantillon dopé sans protéine a été soumis aux mêmes opérations.

Les échantillons initiaux (non-traités) ainsi que ceux récupérés après traitement ont été analysés selon la méthode EPA 537.1, détaillée dans la publication de Kaboré et al., 2018 , Science of the Total Environment, 616-617, 1089-1100, pour la quantification de chacune des PFAS présentes, avec une limite de quantification variable selon les composés, entre 0,53 et 2,4 ng/L.

### B.2/ Résultats

Les résultats obtenus sont montrés dans le tableau 7.

**Tableau 7 - taux d'abattement des PFAS à l'issue d'un procédé comprenant la mise en contact d'un échantillon d'eau dopée aux PFAS avec une protéine puis séparation par flottation**

| Substance\Protéine | - | BSA | CHA | LYS | SOJ | OVA | OVAb |
|---|---|---|---|---|---|---|---|
| PFHxA | 3% | 57% | 9% | 17% | 9% | 35% | 49% |
| PFOA | 4% | 72% | 18% | 53% | 14% | 99% | - |
| PFDA | 6% | 8% | 47% | 80% | - | 94% | 94% |
| PFBS | 7% | 44% | 10% | 16% | 7% | 23% | 43% |
| PFHxS | 13% | 54% | 16% | 52% | 16% | 100% | 100% |
| PFHpS | 12% | 64% | 37% | 63% | 32% | 100% | 100% |
| PFOS | 8% | 54% | 57% | 77% | 58% | 99% | - |
| GenX | 4% | 84% | 13% | 19% | 8% | 73% | - |
| 6:2 FTAB | 5% | 97% | 28% | 33% | 20% | 96% | 96% |

On constate que l'ovalbumine OVA permet d'obtenir les meilleurs taux d'abattement pour la grande majorité des PFAS étudiées. Pour le PFHxA (acide perfluorohexanoïque), le PFBS (acide perfluorobutane sulfonique) et le GenX (acide perfluoro (2-méthyl-3-oxahexanoïque)), son efficacité est un peu moindre que celle de la BSA, et elle est équivalente pour le 6:2 FTAB. Pour ces substances, le taux d'abattement reste toutefois satisfaisant, et peut être amélioré en augmentant la concentration d'ovalbumine mise en œuvre. Par rapport aux protéines de chanvre ou de soja, préconisées par l'art antérieur, l'ovalbumine s'avère bien supérieure.

Au global, en considérant l'ensemble des PFAS, le procédé utilisant l'ovalbumine, conformément à l'invention, s'avère de loin le plus performant.

### C/ EXEMPLE 3 - taille des bulles

Des échantillons d'eau ont été dopés avec 15 composés PFAS (PFHxA, PFHpA, PFOA, PFNA, PFDA, PFBS, PFPeS (acide perfluoropentanesulfonique), PFHxS, PFHpS (acide perfluoroheptanesulfonique), PFOS, PFNS (acide perfluorononanesulfonique), PFDS (acide perfluorodécanesulfonique), GenX, 6:2 FTAB et 6:2 FTS (acide sulfonique du 6:2 fluorotélomère)) selon les concentrations initiales figurant dans le tableau 8, correspondant à une concentration totale de 500 ng/L. Le pH enregistré était de 6,30 ± 0,20.

Cette expérience a été réalisée comme décrit dans l'Expérience 2 ci-avant, à l'exception de la concentration de blanc d'œuf utilisée, qui a été de 0,2 g/l, du temps de bullage, qui a été de 25 min, et du débit d'air injecté dans le milieu liquide, qui a été de 3,0 ± 0,2 l/min.

Trois pierres à buller différentes, de porosité respective de 20 µm, 40 - 50 µm et 70 - 90 µm, ont été utilisées pour étudier l'influence de la taille des bulles sur l'efficacité du traitement.

Les résultats obtenus, en termes d'élimination de chacun des composés, pour chacune des tailles de bulles, sont montrés dans la tableau 8.

**Tableau 8 - taux d'abattement des PFAS en fonction de la taille des bulles - « Conc. ini. » = concentration initiale - « Ab. » = abattement - « < » indique une valeur inférieure à la limite de quantification - « > » indique que l'abattement est supérieur à 99,9%, en raison d'une concentration résiduelle après traitement qui est inférieure à la limite de quantification**

| PFAS | Conc. ini. (ng/l) | Porosité 20 µm | | Porosité 40-50 µm | | Porosité 70-90 µm | |
|---|---|---|---|---|---|---|---|
| | | (ng/l) | Ab. (%) | (ng/l) | Ab. (%) | (ng/l) | Ab. (%) |
| PFHxA | 30,9 | 5,5 | 82 | 7,2 | 77 | 8,4 | 73 |
| PFHpA | 30,1 | <2,5 | >99,9 | <2,5 | >99,9 | <2,5 | >99,9 |
| PFOA | 26,9 | <0,5 | >99,9 | <0,5 | >99,9 | <0,5 | >99,9 |
| PFNA | 21,8 | <2,5 | >99,9 | <2,5 | >99,9 | <2,5 | >99,9 |
| PFDA | 57 | <2,5 | >99,9 | <2,5 | >99,9 | <2,5 | >99,9 |
| PFBS | 34,4 | 17,4 | 49 | 18,8 | 45 | 20,3 | 41 |
| PFPeS | 30,1 | <2,5 | >99,9 | <2,5 | >99,9 | <2,5 | >99,9 |
| PFHxS | 23,8 | <2,5 | >99,9 | <2,5 | >99,9 | <2,5 | >99,9 |
| PFHpS | 27,2 | <2,5 | >99,9 | <2,5 | >99,9 | <2,5 | >99,9 |
| PFOS | 21,7 | <0,5 | >99,9 | <0,5 | >99,9 | <0,5 | >99,9 |
| PFNS | 35 | <2,5 | >99,9 | <2,5 | >99,9 | <2,5 | >99,9 |
| PFDS | 30,1 | <2,5 | >99,9 | <2,5 | >99,9 | <2,5 | >99,9 |
| Gen-X | 22,8 | <2,5 | >99,9 | <2,5 | >99,9 | <2,5 | >99,9 |
| 6:2 FTAB | 31,5 | <2,5 | >99,9 | <2,5 | >99,9 | <2,5 | >99,9 |
| 6:2 FTS | 30,0 | <2,5 | >99,9 | <2,5 | >99,9 | <2,5 | >99,9 |

Ces résultats confirment l'efficacité du procédé selon l'invention pour la réduction des concentrations de PFAS dans l'eau contaminée. Dans les conditions expérimentales appliquées, les bulles de taille 20 µm s'avèrent les plus efficaces sur l'ensemble des PFAS testés, ce qui met en évidence l'avantage d'une surface de contact avec l'ovalbumine étendue. Les bulles de taille supérieure, 40 - 50 µm et 70 - 90 µm, montrent également une efficacité notable.

Des observations spécifiques concernant les composés à chaîne courte (PFBS, PFHxA) révèlent que la plus petite taille de bulles améliore significativement l'efficacité d'élimination de ces PFAS.

## Revendications

1. Procédé de traitement d'un milieu liquide aqueux contaminé par au moins une substance perfluoroalkylée ou polyfluoroalkylée, comprenant une étape de mise en contact dudit milieu liquide avec de l'ovalbumine puis une étape d'élimination de ladite ovalbumine dudit milieu liquide, ledit procédé étant **caractérisé en ce que** ladite étape d'élimination est réalisée par flottation.

2. Procédé selon la revendication 1, selon lequel l'étape de mise en contact dudit milieu liquide avec l'ovalbumine est réalisée pendant une durée comprise entre 5 et 60 minutes.

3. Procédé selon la revendication 1 ou 2, selon lequel l'étape de mise en contact dudit milieu liquide avec l'ovalbumine comprend l'introduction dans ledit milieu liquide d'une quantité d'ovalbumine comprise entre 0,05 et 10 g/l.

4. Procédé selon l'une quelconque des revendications 1 à 3, selon lequel, pour l'étape de mise en contact dudit milieu liquide avec l'ovalbumine, l'ovalbumine est introduite dans ledit milieu liquide contenue dans du blanc d'œuf.

5. Procédé selon l'une quelconque des revendications 1 à 4, selon lequel ledit milieu liquide présente un pH compris entre 6 et 6,8.

6. Procédé selon l'une quelconque des revendications 1 à 5, selon lequel ladite étape d'élimination par flottation comprend l'injection de gaz dans ledit milieu liquide pendant une durée comprise entre 5 et 60 minutes de sorte à former une mousse en surface dudit milieu liquide, et la collecte de la mousse ainsi formée.

7. Procédé selon l'une quelconque des revendications 1 à 6, selon lequel ledit milieu liquide contient de 0,1 à 2000 µg/l de substance(s) perfluoroalkylée(s) ou polyfluoroalkylée(s).

8. Procédé selon l'une quelconque des revendications 1 à 7, selon lequel la substance perfluoroalkylée ou polyfluoroalkylée contenue dans ledit milieu liquide comprend une chaine alkyle en C7 ou plus.

9. Procédé selon l'une quelconque des revendications 1 à 7, selon lequel la substance perfluoroalkylée ou polyfluoroalkylée contenue dans ledit milieu liquide est un acide sulfonique perfluoroalkylé comprenant une chaine alkyle en C6 ou plus.

10. Procédé selon l'une quelconque des revendications 1 à 9, selon lequel ledit milieu liquide est une eau souterraine, une eau de surface, une eau issue du lavage d'un sol ou des eaux usées.

## Patentansprüche

1. Verfahren zur Behandlung eines wässrigen flüssigen Mediums, das mit mindestens einer perfluoralkylierten oder polyfluoralkylierten Substanz kontaminiert ist, umfassend einen Schritt der Kontaktaufnahme des flüssigen Mediums mit Ovalbumin und anschließend einen Schritt der Entfernung des Ovalbumins aus dem flüssigen Medium, wobei das Verfahren **dadurch gekennzeichnet ist, dass** der Schritt der Entfernung durch Flotation durchgeführt wird.

2. Verfahren nach Anspruch 1, wobei der Schritt der Kontaktaufnahme des flüssigen Mediums mit dem Ovalbumin für eine Dauer zwischen 5 und 60 Minuten durchgeführt wird.

3. Verfahren nach Anspruch 1 oder 2, wobei der Schritt der Kontaktaufnahme des flüssigen Mediums mit dem Ovalbumin die Einbringung einer Menge an Ovalbumin zwischen 0,05 und 10 g/l in das flüssige Medium umfasst.

4. Verfahren nach einem der Ansprüche 1 bis 3, wobei für den Schritt der Kontaktaufnahme des flüssigen Mediums mit dem Ovalbumin das Ovalbumin in das in Eiweiß enthaltene flüssige Medium eingebracht wird.

5. Verfahren nach einem der Ansprüche 1 bis 4, wobei das flüssige Medium einen pH-Wert zwischen 6 und 6,8 aufweist.

6. Verfahren nach einem der Ansprüche 1 bis 5, wobei der Schritt der Entfernung durch Flotation das Injizieren von Gas in das flüssige Medium für eine Dauer von 5 bis 60 Minuten umfasst, um einen Schaum an der Oberfläche des flüssigen Mediums zu bilden, und das Auffangen des so gebildeten Schaums.

7. Verfahren nach einem der Ansprüche 1 bis 6, wobei das flüssige Medium 0,1 bis 2000 µg/l perfluoralkylierte oder polyfluoralkylierte Substanz(en) enthält.

8. Verfahren nach einem der Ansprüche 1 bis 7, wobei die in dem flüssigen Medium enthaltene perfluoralkylierte oder polyfluoralkylierte Substanz eine C7- oder mehr-Alkylkette umfasst.

9. Verfahren nach einem der Ansprüche 1 bis 7, wobei die in dem flüssigen Medium enthaltene perfluoralkylierte oder polyfluoralkylierte Substanz eine perfluoralkylierte Sulfonsäure ist, umfassend eine Alkylkette mit C6 oder mehr.

10. Verfahren nach einem der Ansprüche 1 bis 9, wobei das flüssige Medium Grundwasser, Oberflächenwasser, Wasser aus der Bodenwaschung oder Abwasser ist.

## Claims

1. Method for treating an aqueous liquid medium contaminated by at least one per- or polyfluoroalkyl substance, comprising a step of placing said liquid medium in contact with ovalbumin then a removal step of removing said ovalbumin from said liquid medium, said method being **characterized in that** said removal step is performed by flotation.

2. Method according to claim 1, wherein the step of placing said liquid medium in contact with ovalbumin is performed for a period between 5 and 60 minutes.

3. Method according to claim 1 or 2, wherein the step of placing said liquid medium in contact with ovalbumin comprises introducing into said liquid medium an amount of ovalbumin between 0.05 and 10 g/l.

4. Method according to any one of claims 1 to 3, wherein, for the step of placing said liquid medium in contact with ovalbumin, the ovalbumin is introduced into said liquid medium contained in egg white.

5. Method according to any one of claims 1 to 4, wherein said liquid medium has a pH between 6 and 6.8.

6. Method according to any one of claims 1 to 5, wherein said removal step by flotation comprises injecting gas into said liquid medium for a period between 5 and 60 minutes so as to form a foam at the surface of said liquid medium, and collecting the foam thus formed.

7. Method according to any one of claims 1 to 6, wherein said liquid medium contains 0.1 to 2,000 µg/l of per- or polyfluoroalkyl substance(s).

8. Method according to any one of claims 1 to 7, wherein the per- or polyfluoroalkyl substance contained in said liquid medium comprises an alkyl chain having 7 or more carbon atoms.

9. Method according to any one of claims 1 to 7, wherein the per- or polyfluoroalkyl substance contained in said liquid medium is a perfluoroalkyl sulfonic acid comprising an alkyl chain having 6 or more carbon atoms.

10. Method according to any one of claims 1 to 9, wherein said liquid medium is ground water, surface water, water from soil washing or wastewater.
